# EUROPEAN PATENT APPLICATION

(11) **EP 4 831 855 A1**
(43) Date of publication of application: **28.10.2026**
(21) Application number: 23962244.2
(22) Date of filing: 21.12.2023
(51) Int. Cl.: G06F 21/62

(54) **INFORMATION PROCESSING DEVICE, INFORMATION PROCESSING METHOD, AND RECORDING MEDIUM**

(71) Applicant: NEC Corporation, 108-8001 Tokyo (JP)
(72) Inventor: YOSHIHARA, Daiki, Tokyo 108-8001 (JP)
(74) Representative: Betten & Resch
(86) International application number: PCT/JP2023/045976
(87) International publication number: WO 2025/134324

(57) **Abstract**

An information processing apparatus includes: an acquisition unit that acquires an image of a user; a conversion unit that generates a converted image by replacing at least a part of the user included in the image of the user with an avatar image corresponding to the user; and an output unit that outputs a guide image obtained by superimposing guidance information for the user on the converted image. According to such an information processing apparatus, it is possible to appropriately present the guidance information to the user while respecting the user's privacy.

## Description

### Technical Field

The present disclosure relates to the technical field of an information processing apparatus, an information processing method, and a recording medium.

### Background Art

For this type of apparatus, there is known an apparatus that outputs information about recognition processing to a user who is a subject of recognition. For example, Patent Literature 1 discloses a technique/technology of displaying an initial screen indicating that it is in a facial recognition standby state when a user's approach is detected, and displaying a notification screen indicating the progress of facial recognition when the user's face is detected from a live image.

### Citation List

### Patent Literature

Patent Literature 1: JP2023-101822A

### Summary

### Technical Problem

It is an example object of the present disclosure to provide an information processing apparatus, an information processing method, and a recording medium designed to improve the technology/technique disclosed in Citation List.

### Solution to Problem

An information processing apparatus according to an example aspect of the present disclosure includes: an acquisition unit that acquires an image of a user; a conversion unit that generates a converted image by replacing at least a part of the user included in the image of the user with an avatar image corresponding to the user; and an output unit that outputs a guide image obtained by superimposing guidance information for the user on the converted image.

An information processing method according to an example aspect of the present disclosure is an information processing method that is executed by at least one computer, the information processing method including: acquiring an image of a user; generating a converted image by replacing at least a part of the user included in the image of the user with an avatar image corresponding to the user; and outputting a guide image obtained by superimposing guidance information for the user on the converted image.

A recording medium according to an example aspect of the present disclosure is a recording medium on which a computer program that causes at least one computer to execute an information processing method is recorded, the information processing method including: acquiring an image of a user; generating a converted image by replacing at least a part of the user included in the image of the user with an avatar image corresponding to the user; and outputting a guide image obtained by superimposing guidance information for the user on the converted image.

### Brief Description of Drawings

[FIG. 1] FIG. 1 is a block diagram illustrating a hardware configuration of a first information processing apparatus.
[FIG. 2] FIG. 2 is a block diagram illustrating a functional configuration of the first information processing apparatus.
[FIG. 3] FIG. 3 is a flowchart illustrating an operation flow in the first information processing apparatus.
[FIG. 4] FIG. 4 is a plan view illustrating an example of each image processed by the first information processing apparatus.
[FIG. 5] FIG. 5 is a block diagram illustrating a functional configuration of a second information processing apparatus.
[FIG. 6] FIG. 6 is a flowchart illustrating a flow of avatar generation operation in the second information processing apparatus.
[FIG. 7] FIG. 7 is a diagram illustrating an example of user information in the second information processing apparatus.
[FIG. 8] FIG. 8 is a plan view illustrating an example of color mapping for avatar images in the second information processing apparatus.
[FIG. 9] FIG. 9 is a block diagram illustrating a functional configuration of a third information processing apparatus.
[FIG. 10] FIG. 10 is a flowchart illustrating an operation flow in the third information processing apparatus.
[FIG. 11] FIG. 11 is a schematic diagram illustrating an example of operation of the third information processing apparatus.
[FIG. 12] FIG. 12 is a plan view illustrating an example of display of a guide image in the third information processing apparatus.
[FIG. 13] FIG. 13 is a block diagram illustrating a functional configuration of a fourth information processing apparatus.
[FIG. 14] FIG. 14 is a flowchart illustrating an operation flow in the fourth information processing apparatus.
[FIG. 15] FIG. 15 is a conceptual diagram illustrating an example of operation at a facility to which the fourth information processing apparatus is applied.
[FIG. 16] FIG. 16 is a plan view illustrating an example of display of an avatar image in a fifth information processing apparatus.
[FIG. 17] FIG. 17 is a plan view illustrating an example of display of a guide image in the fifth information processing apparatus.

### Description of Example embodiments

Hereinafter, an information processing apparatus, an information processing method, and a recording medium according to example embodiments will be described with reference to the drawings.

### <First Example Embodiment>

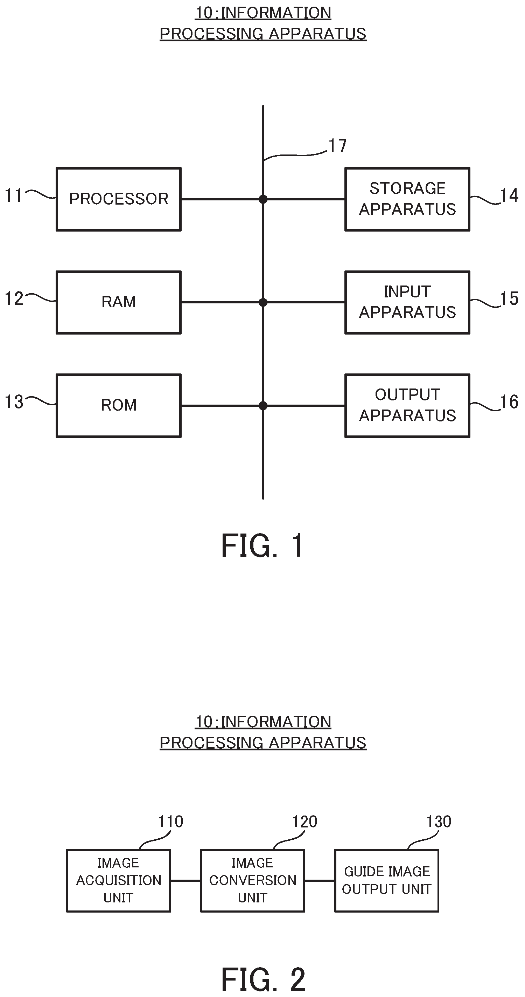

A first information processing apparatus will be described with reference to FIG. 1 to FIG. 4.

### (Hardware Configuration)

First, a hardware configuration of a first information processing apparatus will be described with reference to FIG. 1. FIG. 1 is a block diagram illustrating the hardware configuration of the first information processing apparatus.

As illustrated in FIG. 1, a first information processing apparatus 10 includes a processor 11, a RAM (Random Access Memory) 12, a ROM (Read Only Memory) 13, and a storage apparatus 14. The information processing apparatus 10 may further include an input apparatus 15 and an output apparatus 16. The processor 11, the RAM 12, the ROM 13, the storage apparatus 14, the input apparatus 15, and the output apparatus 16 are each connected via a data bus 17. Note that the data bus 17 may be an interface other than a data bus (e.g., a LAN, a USB, etc.).

The processor 11 reads a computer program. For example, the processor 11 is configured to read a computer program stored in at least one of the RAM 12, the ROM 13, and the storage apparatus 14. Alternatively, the processor 11 may read a computer program stored on a computer-readable recording medium, using a not-illustrated recording medium reading apparatus. The processor 11 may also acquire (i.e., read) a computer program from a not-illustrated apparatus disposed outside the information processing apparatus 10 via a network interface. The processor 11 controls the RAM 12, the storage apparatus 14, the input apparatus 15, and the output apparatus 16 by executing the read computer program. Especially in the present example embodiment, when the processor 11 executes the read computer program, a functional block for performing processing of outputting a guide image to a user is implemented within the processor 11. That is, the processor 11 may function as a controller that performs each control within the information processing apparatus 10.

The processor 11 may be configured, for example, as a CPU (Central Processing Unit), a GPU (Graphics Processing Unit), a FPGA (Field-Programmable Gate Array), a DSP (Digital Signal Processor), an ASIC (Application-Specific Integrated Circuit), or a quantum processor. The processor 11 may be configured using one of them or a plurality of them in parallel.

The RAM 12 temporarily stores the computer program to be executed by the processor 11. The RAM 12 temporarily stores data that are temporarily used by the processor 11 when the processor 11 is executing the computer program. The RAM 12 may be, for example, a D-RAM (Dynamic Random Access Memory) or a SRAM (Static Random Access Memory). In addition, another type of volatile memory may be used instead of the RAM 12.

The ROM 13 stores the computer program to be executed by the processor 11. The ROM 13 may also store other fixed data. The ROM 13 may be, for example, a P-ROM (Programmable Read Only Memory) or an EPROM (Erasable Read Only Memory). In addition, another type of nonvolatile memory may be used instead of the ROM 13.

The storage apparatus 14 stores data that are stored by the information processing apparatus 10 for a long time. The storage apparatus 14 may also function as a transitory storage apparatus for the processor 11. The storage apparatus may store therein the computer program to be executed by the processor 11. The storage apparatus 14 may include, for example, at least one of a hard disk drive, a magneto-optical disk apparatus, a SSD (Solid State Drive), and a disk array apparatus.

The input apparatus 15 is an apparatus that receives input instructions from a user of the information processing apparatus 10. The input apparatus 15 may include, for example, at least one of a keyboard, a mouse, and a touch panel. The input apparatus 15 may be configured as a part of a smartphone, a tablet terminal, an earphone-type terminal, a watch-type terminal, a HMD (Head-Mounted Display) terminal, and the like. The input apparatus 15 may be, for example, an apparatus that allows audio input, including a microphone.

The output apparatus 16 is an apparatus that outputs information about the information processing apparatus 10 to the outside. For example, the output apparatus 16 may be a display apparatus (e.g., a display, a digital signage, etc.) that is configured to display the information about the information processing apparatus 10. Furthermore, the output apparatus 16 may be a speaker or the like that is configured to audio-output the information about the information processing apparatus 10.

Note that a part of the components described in FIG. 1 may be configured to be included in an apparatus external to the first information processing apparatus 10. For example, the first information processing apparatus 10 may include the processor 11, the RAM 12, and the ROM 13, while the other components such as the storage apparatus 14, the input apparatus 15, and the output apparatus 16 may be configured as external apparatuses. That is, the first information processing apparatus 10 may be configured as an information processing system including a plurality of different apparatuses. Furthermore, a part of an arithmetic/computational function of the first information processing apparatus 10 may be implemented by an external server, a cloud, or the like.

### (Functional Configuration)

Next, with reference to FIG. 2, a functional configuration of the first information processing apparatus 10 will be described. FIG. 2 is a block diagram illustrating the functional configuration of the first information processing apparatus.

In FIG. 2, the first information processing apparatus 10 includes, as processing blocks for realizing its functions, an image acquisition unit 110, an image conversion unit 120, and a guide image output unit 130. Note that each of the image acquisition unit 110, the image conversion unit 120, and the guide image output unit 130 may be implemented, for example, by the aforementioned processor 11 (see FIG. 1).

The image acquisition unit 110 is configured to acquire an image including a user. The image acquisition unit 110 acquires, for example, the image of a user attempting to enter a predetermined facility or area, by capturing the user with a camera. Hereinafter, the image acquired by the image acquisition unit 110 will be referred to as a "captured image" as appropriate. The captured image may include the user's entire body or may include only a part of the user (e.g., a face, etc.). Furthermore, the captured image may include a single user or may include a plurality of users. The captured image acquired by the image acquisition unit 110 is configured to be outputted to the image conversion unit 120.

The image conversion unit 120 is configured to generate a converted image by replacing at least a part of the user included in the captured image with an avatar image corresponding to the user. Here, "at least a part" refers to a feature of the user included in the captured image where consideration for the user's privacy is required. Hereinafter, this feature will be referred to as a "conversion feature." The conversion feature may encompass, for example, the user's face. However, the conversion feature may also encompass the user's entire body. The image conversion unit 120 replaces the user's conversion feature in the captured image with the avatar image. The avatar image is an image capable of protecting the privacy of the conversion feature. The avatar image is prepared for each user, and different avatar images are used for different users. For example, in a case where a user image includes a plurality of users, the image conversion unit 120 replaces the facial parts of the plurality of users with avatar images including different faces, respectively. The avatar image may be pre-registered. Furthermore, the avatar image may be generated by the first information processing apparatus 10. A configuration for generating the avatar image will be described in detail in another example embodiment later.

The guide image output unit 130 is configured to superimpose guidance information onto the converted image generated by the image conversion unit 120 to generate a guide image. The guidance information may, for example, be guiding/directional information for a user (e.g., information indicating a destination or a direction to go, etc.). Furthermore, the guidance information may be information indicating a user's situation or status. The guidance information is information that is individually modified or adjusted for a user. Therefore, in a case where there are a plurality of users, there may be a plurality of pieces of guidance information corresponding to the plurality of users. The guide image output unit 130 may superimpose the guide image onto a user's surroundings in the converted image. That is, the guide image output unit 130 may superimpose the guidance information at a position where it is clear that the guidance information is intended for that user. In a case where the converted image includes a plurality of users, the guide image output unit 130 may superimpose different pieces of guidance information around the plurality of users, respectively. The guidance information may include, for example, messages or images. Furthermore, the guidance information may be included within the avatar image itself. That is, the avatar image itself may serve as an image displaying the guidance information for the user. In this case, the image conversion unit 120 described above also functions as the guide image output unit 130.

The guide image output unit 130 is configured to output the generated guide image. The guide image may be displayed, for example, by a display apparatus provided in the first information processing apparatus 10 (e.g., the output apparatus 16 illustrated in FIG. 1). Alternatively, the guide image may be displayed by a display apparatus provided separately from the first information processing apparatus 10. Note that there may be provided a plurality of display apparatuses that display the guide images. The guide image may be displayed, for example, at a time when it becomes visible to a user. Specifically, the guide image may be displayed when a user approaches the display apparatus. In this case, the image acquisition unit 110 may capture the user, for example, using a camera provided on the display apparatus to acquire an image of the user. The display apparatus may have a function of displaying the guide image with the image flipped horizontally.

### (Operation Flow)

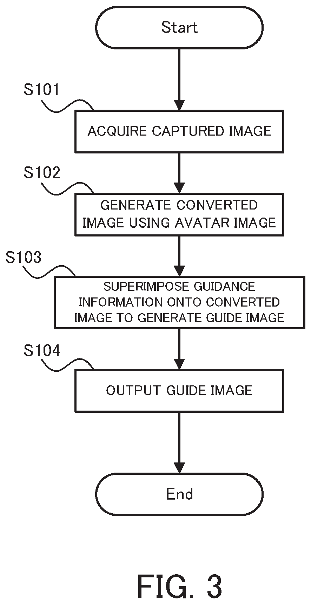

Next, with reference to FIG. 3, an operation flow in the first information processing apparatus 10 will be described. FIG. 3 is a flowchart illustrating the operation flow in the first information processing apparatus.

As illustrated in FIG. 3, when the operation begins in the first information processing apparatus 10, the image acquisition unit 110 first acquires a captured image including a user (Step S101). Then, the image conversion unit 120 generates a converted image by replacing the user's conversion feature included in the captured image with an avatar image (Step S102).

Then, the guide image output unit 130 superimposes the guidance information onto the converted image to generate a guide image (Step S103). Then, the guide image output unit 130 outputs the generated guide image (Step S104). The guide image outputted by the guide image output unit 130 may be displayed by a display apparatus, as already described.

### (Image Example)

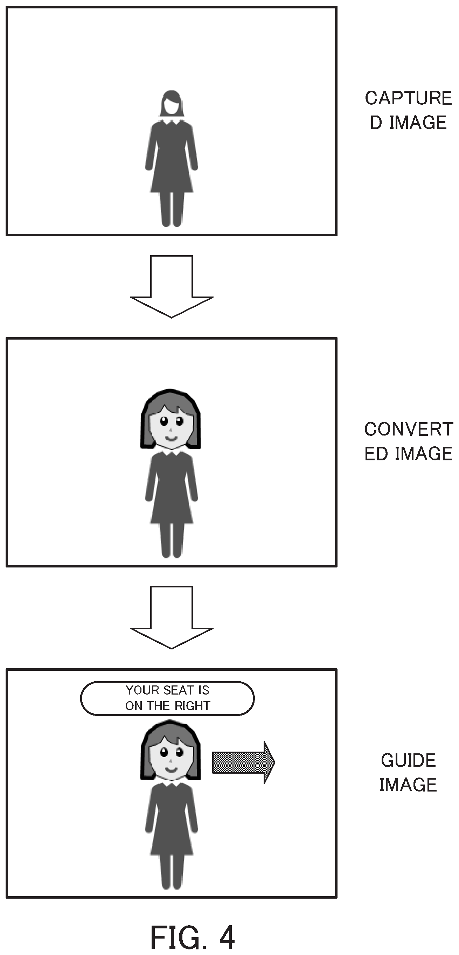

Next, with reference to FIG. 4, each image processed by the first information processing apparatus 10 will be specifically described. FIG. 4 is a plan view illustrating an example of each image processed by the first information processing apparatus.

As illustrated in FIG. 4, the first information processing apparatus 10 first acquires a captured image via the image acquisition unit 110. The captured image includes a feature that requires consideration for a user's privacy. For example, the captured image is an image including a user's face.

Thereafter, the first information processing apparatus 10 generates a converted image by replacing the user's facial part in the captured image with an avatar image. As illustrated in FIG. 4, the converted image has the user's facial part hidden by the avatar image. Therefore, even if other users view the converted image, they would not be able to recognize the user's face.

Subsequently, the first information processing apparatus 10 superimposes the guidance information onto the captured image to generate a guide image. In the example illustrated in FIG. 4, a message stating "Your seat is on the right" is displayed above the user. Additionally, an arrow is displayed to guide the user to the right. Both the message and the arrow are the guidance information. In this manner, the guide image may be generated to include a plurality of pieces of guidance information.

### (Technical Effect)

Next, a technical effect obtained by the first information processing apparatus 10 will be described.

As described in FIG. 1 to FIG. 4, in the first information processing apparatus 10, at least a part of the user is replaced with the avatar image and the guide image with the guidance information superimposed is outputted. In this way, it is possible to appropriately present the guidance information to the user while respecting the user's privacy. Specifically, the user's privacy is protected by replacing at least a part of the user with the avatar image. Furthermore, by superimposing the guidance information, it is possible to provide appropriate guidance for each user.

### <Second Example Embodiment>

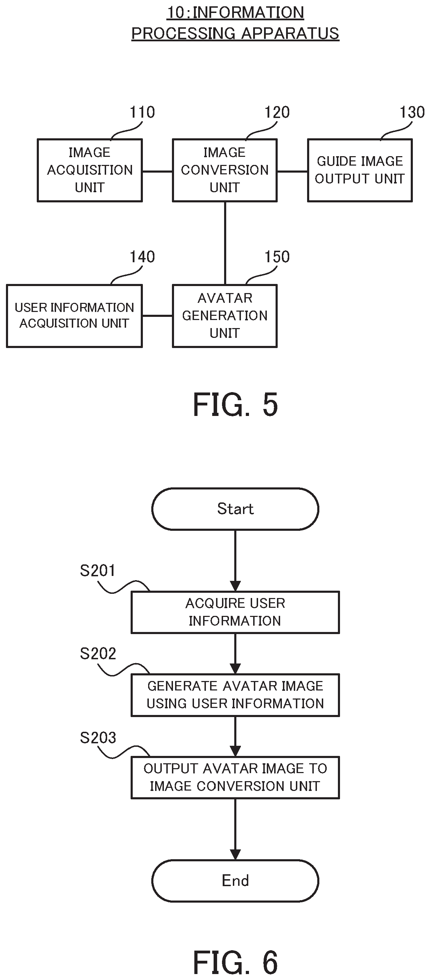

A second information processing apparatus 10 will be described with reference to FIG. 5 to FIG. 8. Note that the second information processing apparatus 10 partially differs in its configuration and operation from the first information processing apparatus 10 described above, and may be the same as the first information processing apparatus 10 in the other parts. Therefore, the following description will detail the parts differing from the first example embodiment, omitting explanations of the other overlapping parts as appropriate.

### (Functional Configuration)

First, with reference to FIG. 5, a functional configuration of the second information processing apparatus 10 will be described. FIG. 5 is a block diagram illustrating the functional configuration of the second information processing apparatus. Note that in FIG. 5, the same reference numerals are assigned to the same components as those described in FIG. 2.

In FIG. 5, the second information processing apparatus 10 includes, as processing blocks for realizing its functions, the image acquisition unit 110, the image conversion unit 120, the guide image output unit 130, a user information acquisition unit 140, and an avatar generation unit 150. That is, the second information processing apparatus 10 further includes the user information acquisition unit 140 and the avatar generation unit 150, in addition to the configuration of the first information processing apparatus (see FIG. 2). Each of the user information acquisition unit 140 and the avatar generation unit 150 may be implemented, for example, the aforementioned processor 11 (see FIG. 1).

The user information acquisition unit 140 is configured to acquire user information, which is information about a user. The user information acquisition unit 140 may, for example, acquire the user information from the captured image acquired by the image acquisition unit 110. Alternatively, the user information acquisition unit 140 may acquire the user information from personal information or the like that is inputted in advance by the user or others. The user information acquisition unit 140 may acquire a plurality of types of user information. A specific example of the user information will be described in detail later.

The avatar generation unit 150 is configured to generate an avatar image based on the user information acquired by the user information acquisition unit 140. The avatar generation unit 150 may generate an avatar image that reflects the user's characteristics based on the user information. For example, the avatar generation unit 150 may generate an avatar image resembling the user. In this way, the user can easily identify their own likeness, which is replaced with the avatar image in the guide image. However, the avatar generation unit 150 may also intentionally generate an avatar image that does not resemble the user. In this case, the user's anonymity in the guide image can be enhanced. A specific example of the avatar image generated by the avatar generation unit 150 will be described in detail later.

### (Avatar Generation Operation)

Next, with reference to FIG. 6, a flow of an avatar generation operation (i.e., an operation performed by the avatar generation unit 150 when generating an avatar) in the second information processing apparatus 10 will be described. FIG. 6 is a flowchart illustrating the flow of the avatar generation operation in the second information processing apparatus.

As illustrated in FIG. 6, when the avatar generation operation begins in the second information processing apparatus 10, the user information acquisition unit 140 first acquires the user information (Step S201). When acquiring the user information from a captured image, the user information acquisition unit 140 may acquire the user information after the image acquisition unit 110 acquires the captured image (i.e., after the Step S101 in FIG. 3). On the other hand, when acquiring the user information from a source other than a captured image, the user information acquisition unit 140 may acquire the user information before the image acquisition unit 110 acquires the captured image (i.e., before the Step S101 in FIG. 3).

Then, the avatar generation unit 150 generates an avatar image based on the user information (Step S202). The avatar generation unit 150 then outputs the generated avatar image to the image conversion unit 120. The image conversion unit 120 in the second information processing apparatus 10 generates a converted image using the avatar image generated by the avatar generation unit 150.

### (User Information)

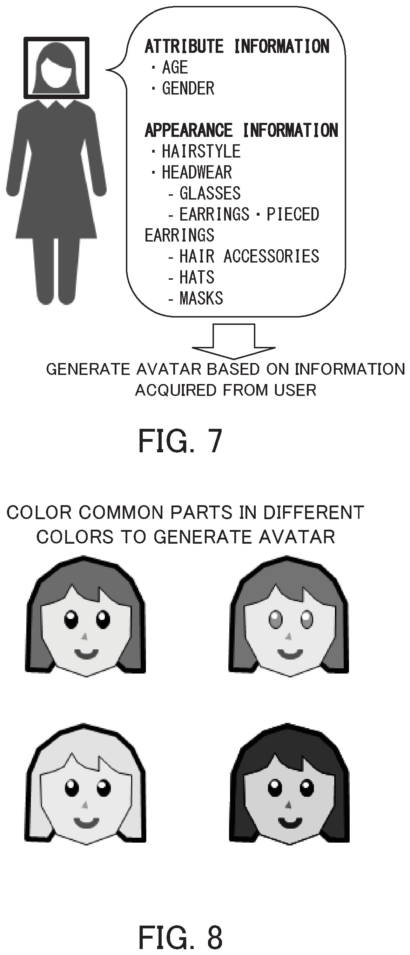

Next, with reference to FIG. 7, the user information acquired by the user information acquisition unit 140 will be specifically described. FIG. 7 is a diagram illustrating an example of the user information in the second information processing apparatus.

As illustrated in FIG. 7, the user information acquisition unit 140 acquires, as the user information, at least one of the user's attribute information and appearance information. The attribute information is, for example, information about the user's age, gender, or the like. The attribute information may be acquired, for example, from information entered by the user, or may be estimated by analyzing the captured image in which the user is included. The appearance information is, for example, information about the user's hairstyle or headwear. Examples of the headwear include glasses, earrings, piercings, hair accessories, hats, masks, and the like.

By using the attribute information and the appearance information as the user information, it is possible to generate an avatar image resembling the user. Consequently, it is possible to generate the avatar image that is easily recognizable to the user. In particular, by obtaining the appearance information from the captured image, the user's appearance on that day can be reflected, thereby enabling the generation of the avatar image that is even more easily recognizable to the user.

### (Example of Avatar Generation)

Next, with reference to FIG. 8, a method of generating an avatar by the avatar generation unit 150 will be specifically described. FIG. 8 is a plan view illustrating an example of color mapping for avatar images in the second information processing apparatus.

As illustrated in FIG. 8, the second information processing apparatus 10 generates an avatar image by combining several parts (hereinafter referred to as "common parts" as appropriate) prepared in advance. For example, the common parts are prepared for features included in a face (such as hairstyle, face shape, eyes, nose, and mouth). The avatar generation unit 150 combines the common parts for each feature based on the user information to generate a basic part of the avatar image.

Subsequently, the avatar generation unit 150 colors the common parts of each feature in different colors to generate an avatar image corresponding to the user. In this way, even when the combination of the common parts are limited (for example, even when there are only a few types of common parts), a very large number of avatar images can be generated through variations in color of each feature. Therefore, even when there are a plurality of users, different avatar images respectively corresponding to the users can be generated.

### (Technical Effect)

Next, a technical effect obtained by the second information processing apparatus 10 will be described.

As described in FIG. 5 to FIG. 8, in the second information processing apparatus 10, the avatar image is generated based on the user information. In this way, it is possible to appropriately generate an avatar image corresponding to the user even when the avatar image is not prepared in advance.

### <Third Example Embodiment>

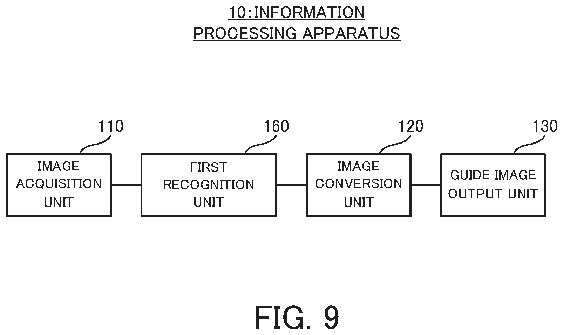

A third information processing apparatus 10 will be described with reference to FIG. 9 to FIG. 12. Note that the third information processing apparatus 10 partially differs in its configuration and operation from the first and second information processing apparatus 10 described above, and may be the same as the first and second information processing apparatuses 10 in the other parts. Therefore, the following description will detail the parts differing from the example embodiments described above, omitting explanations of the other overlapping parts as appropriate.

### (Functional Configuration)

First, with reference to FIG. 9, a functional configuration of the third information processing apparatus 10 will be described. FIG. 9 is a block diagram illustrating the functional configuration of the third information processing apparatus. Note that in FIG. 9, the same reference numerals are assigned to the same components as those described in FIG. 2.

In FIG. 9, the third information processing apparatus 10 includes, as processing blocks for realizing its functions, the image acquisition unit 110, the image conversion unit 120, the guide image output unit 130, and a first recognition unit 160. That is, the third information processing apparatus 10 further includes the first recognition unit 160, in addition to the configuration of the first information processing apparatus (see FIG. 2). The first recognition unit 160 may, for example, be implemented by the aforementioned processor 11 (see FIG. 1).

The first recognition unit 160 is configured to perform recognition processing on a user. Specifically, the first recognition unit 160 is configured to perform biometric recognition using the user's biometric information. For example, the first recognition unit 160 is configured to acquire the biometric information from the captured image acquired by the image acquisition unit 110 and to perform the recognition processing on the user. More specifically, the first recognition unit 160 may be configured to perform facial recognition using the user's facial information. Alternatively, the first recognition unit 160 may be configured to perform iris recognition using the user's iris information. However, the recognition processing performed by the first recognition unit 160 is not limited to the examples described above; for example, the recognition processing may be performed using various types of biometric information, such as fingerprints and palmprints.

The recognition processing performed by the first recognition unit 160 may be determining whether or not the user from whom the biometric information is acquired is a registered user who is registered in advance. In other words, the recognition processing may be identifying the user. In this case, the recognition unit 160 may match the biometric information acquired from the user to the biometric information of a registered user who is registered in advance, and determine whether or not the user is the registered user. For example, the recognition unit 160 may determine that the user is a registered user in a case where a degree of match between the biometric information acquired from the user and the biometric information of a registered user who is registered in advance exceeds a predetermined value.

The image conversion unit 120 in the third information processing apparatus 10 is configured to generate a converted image based on a result of the recognition processing performed by the first recognition unit 160. Specifically, the image conversion unit 120 replaces at least a part of a user having succeeded in the recognition processing with the avatar image to generate a converted image. On the other hand, the image conversion unit 120 replaces at least a part of a user having not succeeded in the recognition processing with a silhouette image to generate a converted image. The silhouette image may, for example, be an image in which the user's face is filled with a single color. Alternatively, the silhouette image may be an image in which the user's face is subjected to mosaic processing. Like the avatar image, the silhouette image serves to render the user's face unrecognizable to other users. However, the silhouette image may not be an image prepared separately for each user, as is the case of the avatar image. That is, the silhouette image may be an image that lacks distinctiveness.

Furthermore, the image conversion unit 120 may replace a part of the user with the silhouette image before the recognition processing is performed by the first recognition unit 160 (e.g., at a time when the user is detected or at a time when the user enters an image capture range). In this case, the silhouette image before the recognition processing is performed and the silhouette image after the recognition processing is performed may be different from each other. For example, the image conversion unit 120 may first replace a part of a user having not yet undergone the recognition processing with a first silhouette image, and then replace the first silhouette image with a second silhouette image for a user having undergone, but failed in the recognition processing. Furthermore, the image conversion unit 120 may replace the first silhouette image with the avatar image for a user having succeeded in the recognition processing.

### (Operation Flow)

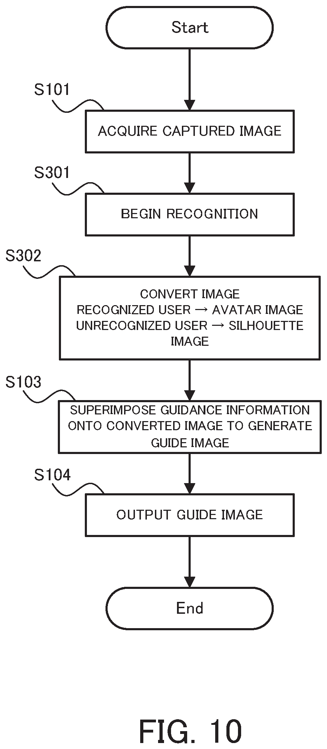

Next, with reference to FIG. 10, an operation flow in the third information processing apparatus 10 will be described. FIG. 10 is a flowchart illustrating the operation flow in the third information processing apparatus. Note that in FIG. 10, the same reference numerals are assigned to the same steps as those described in FIG. 3.

As illustrated in FIG. 10, when the operation begins in the third information processing apparatus 10, the image acquisition unit 110 first acquires a captured image including a user (Step S101). The image acquisition unit 110 may acquire the captured image at a time when the user approaches a display apparatus displaying the guide image. Once the captured image is acquired, the first recognition unit 160 acquires the user's biometric information from the captured image and begins the recognition processing (Step S301).

Then, the image conversion unit 120 generates a converted image by replacing the user's conversion feature included in the captured image with an avatar image (Step S302). At this time, the image conversion unit 120 replaces the conversion feature of the user having succeeded in the recognition processing by the first recognition unit 160, with the avatar image. On the other hand, the image conversion unit 120 replaces the conversion feature of the user having not succeeded in the recognition processing by the first recognition unit 160, with the silhouette image.

Then, the guide image output unit 130 superimposes the guidance information onto the converted image to generate a guide image (Step S103). Then, the guide image output unit 130 outputs the generated guide image (Step S104). The guide image outputted by the guide image output unit 130 may be displayed by a display apparatus.

As described above, in the third information processing apparatus 10, the converted image is generated in real time after the captured image is acquired, and the guide image is displayed on the display apparatus in real time. In this manner, it is possible to perform the recognition processing on the user and immediately notifying the user of the result. This technical effect does not require complete real-time processing; it can be achieved even if there is some delay caused by various types of processing.

Furthermore, the recognition processing by the first recognition unit 160 may not necessarily be performed in real time. For example, the first recognition unit 160 may acquire the user's biometric information from a source other than the captured image prior to acquiring the captured image, and may perform the recognition processing. In this case, the user is notified of the result of the recognition processing performed in advance, via the guide image.

### (Example of Display)

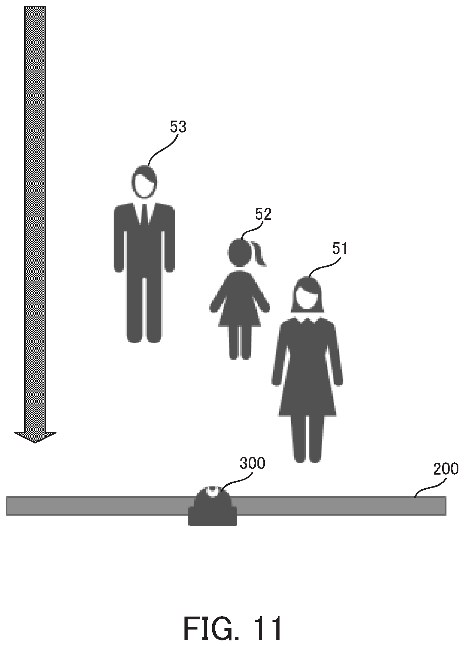

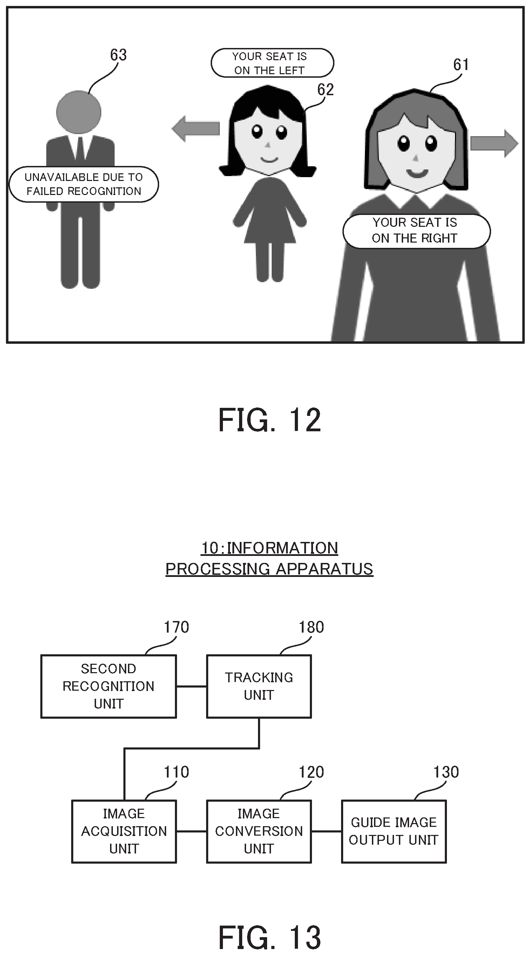

Next, with reference to FIG. 11 and FIG. 12, a specific example of display by the third information processing apparatus 10 will be described. FIG. 11 is a schematic diagram illustrating an example of operation of the third information processing apparatus. FIG. 12 is a plan view illustrating an example of display of the guide image in the third information processing apparatus.

As illustrated in FIG. 11, in the third information processing apparatus, the image acquisition unit 110 acquires an image of a user approaching the display apparatus 200. Specifically, the image acquisition unit 110 captures an image of a user with a camera 300 provided on a display apparatus 200 to acquire a captured image including the user. In the example illustrated in FIG. 11, a captured image including users 51, 52, and 53 is acquired.

Note that the users 51, 52, and 53 are moving toward the display apparatus 200. The first recognition unit 160 may be configured to recognize such users that approach the display apparatus 200, as appropriate. Here, it is assumed that the recognition processing for the users 51 and 52 is successful, while the recognition processing for the user 53 is failed.

In FIG. 12, a user image 61 corresponding to the successfully recognized user 51 has the facial part replaced with an avatar image. Furthermore, a message stating "Your seat is on the right" and an arrow prompting the user to proceed to the right are displayed around the user image 61 as the guidance information. Similarly, a user image 62 corresponding to the successfully recognized user 52 has the facial part replaced with an avatar image. Furthermore, a message stating "Your seat is on the left" and an arrow prompting the user to proceed to the left are displayed around the user image 62 as the guidance information.

On the other hand, a user image 63 corresponding to the not successfully recognized user 53 has the facial part replaced with a silhouette image. Furthermore, a message stating "Unavailable due to failed recognition" is displayed around the user image 63 as the guidance information. Note that even for the user 53 whose face is replaced with a silhouette image, the silhouette image may be replaced with an avatar image if the subsequent recognition processing succeeds. In this way, it is possible to indicate that the recognition processing failed initially, but succeeded in the subsequent processing.

### (Technical Effect)

Next, a technical effect obtained by the third information processing apparatus 10 will be described.

As described in FIG. 9 to FIG. 12, in the third information processing apparatus 10, the conversion feature of the user having succeeded in the recognition processing is replaced with the avatar image, while the conversion feature of the user having not succeeded in the recognition processing is replaced with the silhouette image. In this way, it is possible to confirm whether or not the recognition processing is successful, based on which of the avatar image and the silhouette image the conversion feature is replaced with. That is, a user whose body part is replaced with the avatar image can recognize that their successful recognition processing. On the other hand, a user whose body part is replaced with the silhouette image can recognize that their failed recognition processing. Therefore, it is possible to prompt, for example, the user having not succeeded in the recognition processing to perform actions that may allow the recognition processing to succeed (such as turning their face toward a camera or removing headwear).

### <Fourth Example Embodiment>

A fourth information processing apparatus 10 will be described with reference to FIG. 13 to FIG. 15. Note that the fourth information processing apparatus 10 partially differs in its configuration and operation from the first to third information processing apparatuses 10 described above, and may be the same as the first to third information processing apparatus 10 in the other parts. Therefore, the following description will detail the parts differing from the example embodiments described above, omitting explanations of the other overlapping parts as appropriate.

### (Functional Configuration)

First, with reference to FIG. 13, a functional configuration of the fourth information processing apparatus 10 will be described. FIG. 13 is a block diagram illustrating the functional configuration of the fourth information processing apparatus. Note that in FIG. 13, the same reference numerals are assigned to the same components as those described in FIG. 2.

In FIG. 13, the fourth information processing apparatus 10 includes, as processing blocks for realizing its functions, the image acquisition unit 110, the image conversion unit 120, the guide image output unit 130, a second recognition unit 170, and a tracking unit 180. That is, the fourth information processing apparatus 10 further includes the second recognition unit 170 and the tracking unit 180 in addition to the configuration of the first information processing apparatus (see FIG. 2). Each of the second recognition unit 170 and the tracking unit 180 may be implemented, for example, by the aforementioned processor 11 (see FIG. 1).

The second recognition unit 170 is configured to perform recognition processing on a user. Specifically, the second recognition unit 170 is configured to perform biometric recognition using the user's biometric information. That is, the second recognition unit 170 has a function that similar to or the same as that of the first recognition unit 160 (see FIG. 9) in the third information processing apparatus 10. However, the second recognition unit 170 is configured to acquire the user's biometric information from a source other than the captured image acquired by the image acquisition unit 110. For example, the second recognition unit 170 may acquire the user's biometric information from an image captured separately prior to the capture of the captured image (e.g., an image captured at a location that is different from that of the captured image).

The tracking unit 180 is configured to track a user having undergone the recognition processing performed by the second recognition unit 170. The tracking unit 180 may track the user, for example, using the appearance information of the user having undergone the recognition processing. Specifically, the tracking unit 180 stores the appearance information of the user having undergone the recognition processing and tracks the position of the user matching the stored appearance information. Furthermore, the tracking unit 180 may perform tracking while storing a path taken by the user. The tracking unit 180 may, for example, use a plurality of cameras to track the user. Note that a specific tracking method is not particularly limited, and existing technologies/techniques may be used as appropriate to track the user. The tracking unit 180 may be configured, for example, to track the user within a predetermined area (e.g., within a predetermined facility). In this case, the tracking unit 180 may be configured to automatically terminate tracking of a user having left the predetermined area.

A result of tracking by the tracking unit 180 is used in both the image conversion unit 120 and the guide image output unit 130. A specific method of utilizing the tracking result will be described in detail in the following description of operation.

### (Operation flow)

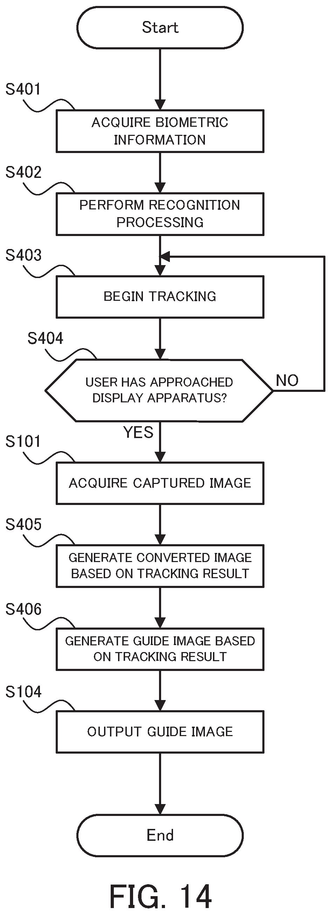

Next, with reference to FIG. 14, an operation flow in the fourth information processing apparatus 10 will be described. FIG. 14 is a flowchart illustrating the operation flow in the fourth information processing apparatus. Note that in FIG. 14, the same reference numerals are assigned to the same steps as those described in FIG. 3.

As illustrated in FIG. 14, when the operation begins in the third information processing apparatus 10, the second recognition unit 170 first acquires the user's biometric information (Step S401). Then, the second recognition unit 170 performs the recognition process on the user using the acquired biometric information (Step S402).

Then, the tracking unit 180 begins tracking the user having undergone the recognition processing (Step S403). While tracking the user, the tracking unit 180 determines whether or not the user has approached the display apparatus 200 (Step S404). Whether or not the user has approached the display apparatus 200 may be determined using the tracking result (e.g., the user's current position). In a case where the user has not approached the display apparatus 200 (Step S404: NO), the tracking unit 180 continues tracking the user.

On the other hand, in a case where the user is approaching the display apparatus 200 (Step S404: YES), the image acquisition unit 110 acquires a captured image including the user (Step S101). Then, the image conversion unit 120 generates a converted image by replacing the user's conversion feature included in the captured image with an avatar image (Step S405). At this time, the image conversion unit 120 generates the converted image based on the tracking result from the tracking unit 180. Specifically, it identifies the user included in the captured image based on the tracking result and replaces the user's conversion feature in the captured image with an avatar image corresponding to the identified user.

Note that, as described for the third information processing apparatus (see FIG. 12), the image conversion unit 120 may replace the user's conversion feature with an avatar image and a silhouette image. That is, the converted image may be generated by replacing the facial part of a user having succeeded in the recognition processing by the second recognition unit 170 with the avatar image, and replacing the facial part of a user having not succeeded in the recognition processing by the second recognition unit 170 with the silhouette image.

Then, the guide image output unit 130 superimposes the guidance information onto the converted image to generate a guide image (Step S406). At this time, the guide image output unit 130 generates the guide image based on the tracking result from the tracking unit 180. Specifically, it identifies the user included in the converted image based on the tracking result and superimposes the guidance information corresponding to the identified user.

Then, the guide image output unit 130 outputs the generated guide image (Step S104). As a result, the guide image outputted by the output unit 130 is displayed to the user identified based on the tracking result.

### (Example of Application to Facility)

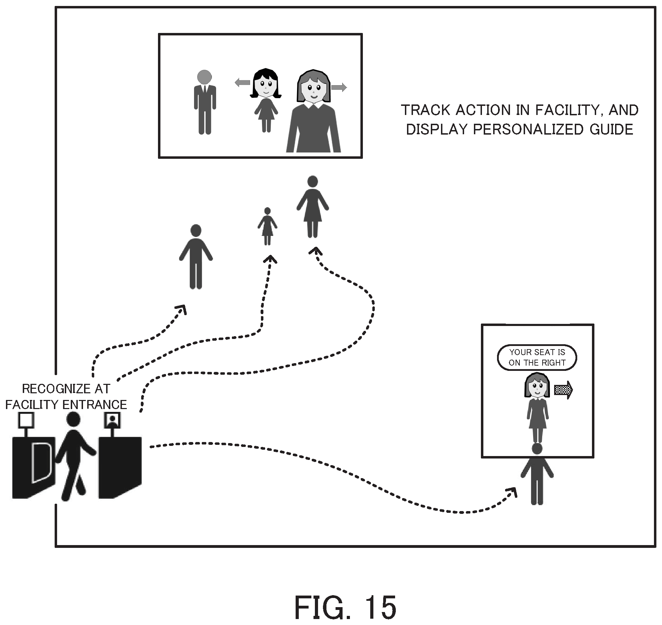

Next, with reference to FIG. 15, a specific example of application of the fourth information processing apparatus 10 will be described. FIG. 15 is a conceptual diagram illustrating an example of operation at a facility to which the fourth information processing apparatus is applied.

As illustrated in FIG. 15, in the fourth information processing apparatus 10, the second recognition unit 170 first acquires the biometric information of a user attempting to enter the facility and performs the recognition processing using the biometric information. These processing may be performed, for example, at an entrance gate equipped with a camera installed at the facility's entrance.

Then, the tracking unit 180 tracks the user as they move within the facility. Then, at a time when the user approaches the display apparatus 200 installed within the facility, the image acquisition unit 110 acquires a captured image. Subsequently, the image conversion unit 120 generates a converted image from the captured image. Thereafter, the guide image output unit 130 outputs a guide image with the guidance information superimposed. This guide image includes the guidance information that is individually modified or adjusted for the user. A plurality of display apparatuses 200 may be installed within the facility. In this case, the guide image may be displayed on each of the plurality of display apparatuses 200.

The facility described above may be, for example, a movie theater. In the movie theater, for example, a screen and seat number corresponding to the user's ticket, as well as a direction to go, may be outputted as the guidance information. Alternatively, the aforementioned facility may be a stadium where sports such as baseball and soccer are played, a live concert venue, or an event venue. In these facilities, for example, the seat number corresponding to the user's ticket and the direction to go may be outputted as the guidance information. Alternatively, the aforementioned facility may be a transportation hub such as an airport. At the airport, for example, a boarding gate and seat number corresponding to the user's ticket, as well as the direction to go, may be outputted as the guidance information. Alternatively, the aforementioned facility may be a lodging facility such as a hotel. At the hotel, for example, the user's room number and the direction to go may be outputted as the guidance information.

Furthermore, the image conversion unit 120 may modify the avatar image according to the type of the facility. For example, the image conversion unit 120 may add items corresponding to the facility to the avatar image. Here, the "items" may include, for example, accessories such as earrings, sunglasses, hats, and clothing, as well as belongings such as bags and various types of merchandise/goods. More specifically, soccer ball earrings may be added to the avatar image of a user visiting a soccer stadium. To the avatar image of a user visiting a concert venue, a T-shirt with a concert-related logo may be added. To the avatar image of a user visiting a movie theater, merchandise/goods corresponding to a ticket (e.g., a mask of a character appearing in a movie) may be added.

Furthermore, even within the same facility, the avatar image may be modified for each display apparatus. For example, the image conversion unit 120 may add a red hat to the avatar image when displaying it on a first display apparatus installed near an entrance gate, while adding a blue bag to the avatar image when displaying it on a second display apparatus installed in an area beyond the entrance gate.

The addition of the aforementioned items may be based on a result of the recognition processing performed by the first recognition unit 160 or the second recognition unit 170. For example, first, facial recognition may be performed on the user to identify the individual, and the items corresponding to information linked to the identified individual (e.g., ticket information) or position information on the identified individual may be added to the avatar image.

Additionally, the items may be changed based on the number of visits to the facility. For example, the number of visits may be counted and linked to personal information, so that as the number of visits increases, the appearance of the items becomes more luxurious or the number of items increases. For example, sunglasses may be added to the avatar image of a user having visited 1 to 3 times, a bag may be added to the avatar image of a user having visited 4 to 9 times, in addition to the sunglasses, and a fur coat may be added to the avatar image of a user having visited 10 or more times, in addition to the sunglasses and the bag.

Furthermore, the items added to the avatar described above may include the guidance information. That is, the items may be the guidance information superimposed on the avatar image by the guide image output unit 130. Specifically, the shape of the item may indicate a destination. In this case, for example, the item may have a shape that includes an arrow indicating the direction of the destination. Alternatively, the color of the item may be a color corresponding to the destination. In this case, for example, colors may be assigned to respective areas within the facility (e.g., Red Zone, Blue Zone, Yellow Zone, etc.), and the color of the item may be set to the color of a destination area.

The facility to which the fourth information processing apparatus 10 is applicable, is not limited to the examples described above. The fourth information processing apparatus 10 is applicable to any facility that requires that some guidance information is presented to an entering user. By applying the fourth information processing apparatus, it is possible to provide appropriate guidance to a plurality of users entering the facility while respecting their privacy.

### (Technical Effect)

Next, a technical effect obtained by the fourth information processing apparatus 10 will be described.

As described in FIG. 13, in the fourth information processing apparatus 10, the tracking of a user having undergone the recognition processing is performed. Then, the converted image is generated based on the tracking result. Furthermore, the guide image is generated based on the tracking result. When generating the converted image and the guide image, it is necessary to identify the user within the image. For this reason, for example, in the third information processing apparatus 10 described earlier, the recognition processing is performed on the user by the first recognition unit 160 after the captured image is acquired (see, for example, FIG. 10). On the other hand, in the fourth information processing apparatus, it is possible to identify the user within the image based on the tracking result from the tracking unit 180. Consequently, there is no need to perform the recognition processing again after acquiring the captured image. Therefore, by eliminating the effort of performing the recognition processing each time, it is possible to output the guide image efficiently.

### <Fifth Example Embodiment>

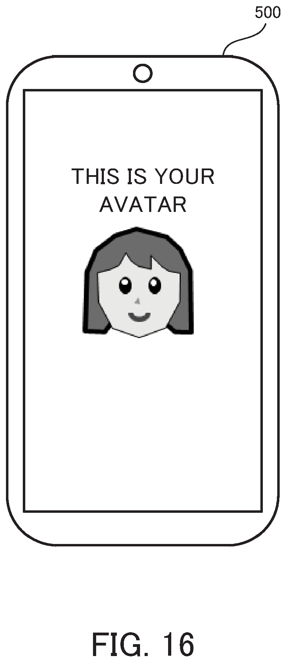

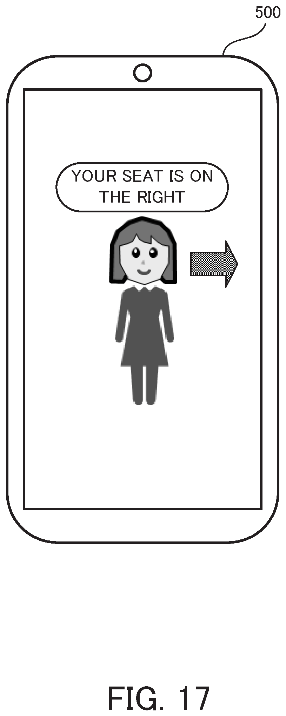

A fifth information processing apparatus 10 will be described with reference to FIG. 16 and FIG. 17. Note that the fifth information processing apparatus 10 partially differs in its operation from the first to fourth information processing apparatuses 10 described above, and may be the same as the first to fourth information processing apparatuses 10 in the other parts. Therefore, the following description will detail the parts differing from the example embodiments described above, omitting explanations of the other overlapping parts as appropriate.

### <Output of Avatar Image>

As illustrated in FIG. 16, the guide image output unit 130 outputs the avatar image to a user terminal 500 (e.g., a smartphone, etc.) held by a user. Consequently, the avatar image is displayed on a display of the user terminal 500. The avatar image displayed in this manner may be used by the user to confirm an avatar image corresponding to themselves. Furthermore, in a case where the avatar image is registered in advance, the guide image output unit 130 may output the avatar image to the user terminal 500 before the user's image is captured (e.g., before the user visits the facility). Additionally, when generating an avatar image, the guide image output unit 130 may output the avatar image to the user terminal 500, for example, at a time when the avatar is generated, at a time when the converted image is created, or at a time when the guide image is outputted.

### <Output of Guide Image>

As illustrated in FIG. 17, the guide image output unit 130 outputs the guide image to the user terminal 500. Consequently, the guide image is displayed on the display of the user terminal 500. In this case, the user can confirm the guide image on their own user terminal 500. Note that the image outputted to the user terminal may be different from the guide image outputted to the display apparatus 200 of a fixed type. For example, the display of the user terminal 500 is likely to be smaller in size than the display of the display apparatus 200. Therefore, the guide image output unit 130 may generate a guide image suitable for a small display. For example, the guide image output unit 130 may crop a part of the guide image or change the font size/text size.

### (Technical Effect)

Next, a technical effect obtained by the fifth information processing apparatus 10 will be described.

As described in FIG. 16 and FIG. 17, in the fifth information processing apparatus 10, the avatar image and the guide image are outputted to the user terminal 500. By outputting the avatar image to the user terminal 500, the user can easily recognize an avatar corresponding to themselves. This technical effect is remarkably exerted when an avatar image that does not resemble the user is generated. Furthermore, by outputting the guide image to the user terminal 500, the user can confirm the guide image on the user terminal 500. Consequently, it is possible to confirm the guide image without looking at the display apparatus 200. Therefore, there is no need to install the display apparatus 200 of a fixed type, thereby achieving reduced costs.

A processing method that is executed on a computer by recording, on a recording medium, a program for causing the configuration in each of the example embodiments to be operated so as to realize the functions in each example embodiment, and by reading, as a code, the program recorded on the recording medium, is also included in the scope of each of the example embodiments. That is, a computer-readable recording medium is also included in the range of each of the example embodiments. Not only the recording medium on which the above-described program is recorded, but also the program itself is also included in each example embodiment.

The recording medium to use may be, for example, a floppy disk (registered trademark), a hard disk, an optical disk, a magneto-optical disk, a CD-ROM, a magnetic tape, a nonvolatile memory card, or a ROM. Furthermore, not only the program that is recorded on the recording medium and that executes processing alone, but also the program that operates on an OS and that executes processing in cooperation with the functions of expansion boards and another software, is also included in the scope of each of the example embodiments. In addition, the program itself may be stored in a server, and a part or all of the program may be downloaded from the server to a user terminal. The program may be provided to a user in a form of SaaS (Software as a Service), for example.

### <Supplementary Notes>

The example embodiments described above may be further described as, but not limited to, the following Supplementary Notes below.

### (Supplementary Note 1)

An information processing apparatus according to Supplementary Note 1 is an information processing apparatus including: an acquisition unit that acquires an image of a user; a conversion unit that generates a converted image by replacing at least a part of the user included in the image of the user with an avatar image corresponding to the user; and an output unit that outputs a guide image obtained by superimposing guidance information for the user on the converted image.

### (Supplementary Note 2)

An information processing apparatus according to Supplementary Note 2 is the information processing apparatus according to Supplementary Note 1, further including: an information acquisition unit that acquires user information about the user; and an avatar generation unit that generates the avatar image based on the user information.

### (Supplementary Note 3)

An information processing apparatus according to Supplementary Note 3 is the information processing apparatus according to Supplementary Note 2, wherein the user information includes at least one of information about an attribute of the user and information about appearance of the user.

### (Supplementary Note 4)

An information processing apparatus according to Supplementary Note 4 is the information processing apparatus according to Supplementary Note 2 or 3, wherein the avatar generation unit generates the avatar image by coloring at least one of parts that constitute a face prepared in advance, in a different color from those of other users.

### (Supplementary Note 5)

An information processing apparatus according to Supplementary Note 5 is the information processing apparatus according to any one of Supplementary Notes 1 to 4, further including: a first recognition unit that performs recognition processing on the user, wherein the conversion unit replaces at least a part of the user having succeeded in the recognition processing with the avatar image, and replaces at least a part of the user having not succeeded in the recognition processing with a silhouette image.

### (Supplementary Note 6)

An information processing apparatus according to Supplementary Note 6 is the information processing apparatus according to any one of Supplementary Notes 1 to 5, wherein the acquisition unit acquires an image of a user approaching a display apparatus by capturing it with a camera, the conversion unit generates the converted image in real time, and the output unit displays the guide image on the display apparatus in real time.

### (Supplementary Note 7)

An information processing apparatus according to Supplementary Note 7 is the information processing apparatus according to Supplementary Note 6, further including: a second recognition unit that performs recognition processing on the user outside an image capture range of the camera; and a tracking unit that performs tracking of the user having undergone the recognition processing, wherein the conversion unit generates the converted image based on a result of the tracking, and the output unit generates the guide image based on a result of the tracking.

### (Supplementary Note 8)

An information processing apparatus according to Supplementary Note 8 is the information processing apparatus according to any one of Supplementary Notes 1 to 7, wherein the acquisition unit acquires an image of the user entering a facility, and the output unit causes a display apparatus installed within the facility to display the guide image, which includes guidance information about the facility.

### (Supplementary Note 9)

An information processing apparatus according to Supplementary Note 9 is the information processing apparatus according to any one of Supplementary Notes 1 to 8, wherein the output unit outputs the avatar image to a user terminal held by the user.

### (Supplementary Note 10)

An information processing apparatus according to Supplementary Note 10 is the information processing apparatus according to any one of Supplementary Notes 1 to 9, wherein the output unit outputs the guide image to a user terminal held by the user.

### (Supplementary Note 11)

An information processing method according to Supplementary Note 11 is an information processing method that is executed by at least one computer, the information processing method including: acquiring an image of a user; generating a converted image by replacing at least a part of the user included in the image of the user with an avatar image corresponding to the user; and outputting a guide image obtained by superimposing guidance information for the user on the converted image.

### (Supplementary Note 12)

A recording medium according to Supplementary Note 12 is a recording medium on which a computer program that causes at least one computer to execute an information processing method is recorded, the information processing method including: acquiring an image of a user; generating a converted image by replacing at least a part of the user included in the image of the user with an avatar image corresponding to the user; and outputting a guide image obtained by superimposing guidance information for the user on the converted image.

### (Supplementary Note 13)

A computer program according to Supplementary Note 13 is a computer program that causes at least one computer to execute an information processing method, the information processing method including: acquiring an image of a user; generating a converted image by replacing at least a part of the user included in the image of the user with an avatar image corresponding to the user; and outputting a guide image obtained by superimposing guidance information for the user on the converted image.

The present disclosure is allowed to be changed, if desired, without departing from the essence or spirit of this disclosure which can be read from the claims and the entire specification. An information processing apparatus, an information processing method, and a recording medium with such changes are also intended to be within the technical scope of the present disclosure.

### Description of Reference Codes

10 Information processing apparatus
11 Processor
12 RAM
13 ROM
14 Storage apparatus
15 Input apparatus
16 Output apparatus
50 User
60 User image
110 Image acquisition unit
120 Image conversion unit
130 Guide image output unit
140 User information acquisition unit
150 Avatar generation unit
160 First recognition unit
170 Second recognition unit
180 Tracking unit
200 Display apparatus
500 User terminal

## Claims

1. An information processing apparatus comprising:
an acquisition unit that acquires an image of a user;
a conversion unit that generates a converted image by replacing at least a part of the user included in the image of the user with an avatar image corresponding to the user; and
an output unit that outputs a guide image obtained by superimposing guidance information for the user on the converted image.

2. The information processing apparatus according to Claim 1, further comprising:
an information acquisition unit that acquires user information about the user; and
an avatar generation unit that generates the avatar image based on the user information.

3. The information processing apparatus according to Claim 2, wherein
the user information includes at least one of information about an attribute of the user and information about appearance of the user.

4. The information processing apparatus according to Claim 2 or 3, wherein
the avatar generation unit generates the avatar image by coloring at least one of parts that constitute a face prepared in advance, in a different color from those of other users.

5. The information processing apparatus according to Claim 1 or 2, further comprising:
a first recognition unit that performs recognition processing on the user, wherein
the conversion unit replaces at least a part of the user having succeeded in the recognition processing with the avatar image, and replaces at least a part of the user having not succeeded in the recognition processing with a silhouette image.

6. The information processing apparatus according to Claim 1 or 2, wherein
the acquisition unit acquires an image of a user approaching a display apparatus by capturing it with a camera,
the conversion unit generates the converted image in real time, and
the output unit displays the guide image on the display apparatus in real time.

7. The information processing apparatus according to Claim 6, further comprising:
a second recognition unit that performs recognition processing on the user outside an image capture range of the camera; and
a tracking unit that performs tracking of the user having undergone the recognition processing, wherein
the conversion unit generates the converted image based on a result of the tracking, and
the output unit generates the guide image based on a result of the tracking.

8. The information processing apparatus according to Claim 1 or 2, wherein
the acquisition unit acquires an image of the user entering a facility, and
the output unit causes a display apparatus installed within the facility to display the guide image, which includes guidance information about the facility.

9. The information processing apparatus according to Claim 1 or 2, wherein
the output unit outputs the avatar image to a user terminal held by the user.

10. The information processing apparatus according to Claim 1 or 2, wherein
the output unit outputs the guide image to a user terminal held by the user.

11. An information processing method that is executed by at least one computer, the information processing method comprising:
acquiring an image of a user;
generating a converted image by replacing at least a part of the user included in the image of the user with an avatar image corresponding to the user; and
outputting a guide image obtained by superimposing guidance information for the user on the converted image.

12. A recording medium on which a computer program that causes at least one computer to execute an information processing method is recorded, the information processing method including:
acquiring an image of a user;
generating a converted image by replacing at least a part of the user included in the image of the user with an avatar image corresponding to the user; and
outputting a guide image obtained by superimposing guidance information for the user on the converted image.
